# EUROPEAN PATENT APPLICATION

(11) **EP 4 778 747 A1**
(43) Date of publication of application: **22.07.2026**
(21) Application number: 26150958.2
(22) Date of filing: 09.01.2026
(51) Int. Cl.: B60H 1/00, B60H 1/32

(54) **VEHICLE THERMAL MANAGEMENT SYSTEM**

(30) Priority: 17.01.2025 JP 2025007108
(71) Applicant: MAZDA MOTOR CORPORATION, Hiroshima 730-8670 (JP)
(72) Inventor: Tatsunori, Kiyomihara, Aki-gun, Hiroshima, 730-8670 (JP); Shutaro, Yamada, Aki-gun, Hiroshima, 730-8670 (JP); Yasuhiko, Nakahara, Aki-gun, Hiroshima, 730-8670 (JP)
(74) Representative: Lorenz Seidler Gossel Part. mbB

(57) **Abstract**

A thermal management system S includes oil coolers FC, RC of a drive device E, a refrigerant circuit 20, a chiller 30, a first circuit 100 that performs temperature adjustment of a battery B, a second circuit 200 that performs temperature adjustment of oil, a third circuit 300 including a radiator 301, and a fourth circuit 400 connected to the chiller 30. When the oil temperature is low, the first circuit 100 and the fourth circuit 400 are connected, and the second circuit 200 is disconnected. When the oil temperature is high, the first circuit 100, the second circuit 200, the third circuit 300, and the fourth circuit 400 are connected. To prevent waste heat of a battery from being absorbed by a drive device when the temperature of the drive device is low and enable the waste heat of the battery to be effectively used for heating.

## Description

The present disclosure relates to a vehicle thermal management system that is mounted on, for example, an electric vehicle.

### [Background Art]

In Japanese Patent Laid-Open No. 2024-127448, a thermal management system for an electric vehicle that supplies electric power from a vehicle battery to a driving motor and travels using the motive power of the driving motor is disclosed.

The thermal management system of Japanese Patent Laid-Open No. 2024-127448is configured such that, by circulating a coolant liquid through a battery temperature adjustment circuit and a drive device temperature adjustment circuit, temperature adjustment control for the battery and the drive device is executed, and the coolant liquid at an elevated temperature is cooled by a radiator circuit and can also be cooled by a chiller circuit connected to a refrigeration cycle.

In the thermal management system of Japanese Patent Laid-Open No. 2024-127448, when raising of the temperature of the battery is desired, the battery temperature adjustment circuit, the chiller circuit, the radiator circuit, and the drive device temperature adjustment circuit are connected in series in this order from the upstream side in the flow direction of the coolant liquid, and heat generated from the drive device is used to raise the temperature of the battery.

By including a chiller that is connected to the battery temperature adjustment circuit and the refrigeration cycle, the vehicle thermal management system not only enables temperature adjustment of the battery using the coolant liquid whose temperature has been adjusted by exchanging heat with a refrigerant of the refrigeration cycle, but also enables waste heat of the battery to be effectively used for heating in the refrigeration cycle, leading to a reduction in power consumption.

When the temperature of the drive device decreases such as when being left in cold condition for a long period of time, the drive device is in a low-temperature state. In such a situation, if the drive device temperature adjustment circuit and the battery temperature adjustment circuit are connected in series as in Patent Literature 1, the heat of the coolant liquid that has flowed through the battery temperature adjustment circuit is absorbed by the drive device while the coolant liquid flows through the drive device temperature adjustment circuit. This leads to a problem that the waste heat of the battery cannot be used for heating in the refrigeration cycle and in turn electric power required for heating increases.

The present disclosure has been made in view of such a point, and an object thereof is to prevent the waste heat of the battery from being absorbed by the drive device when the temperature of the drive device is low and enable the waste heat of the battery to be effectively used for heating.

In order to achieve the object described above, in an aspect of the present disclosure, a vehicle thermal management system mounted on a vehicle that travels by supplying electric power of a battery to a drive device can be assumed. The vehicle thermal management system includes: an oil cooler through which oil of the drive device flows; a refrigerant circuit including a compressor that compresses a refrigerant, an outdoor condenser into which the refrigerant compressed by the compressor flows, and a chiller expansion valve that expands the refrigerant flowing out of the outdoor condenser; a chiller connected between the chiller expansion valve and the compressor in the refrigerant circuit; a first circuit that is configured to allow a heating medium to flow therethrough and performs temperature adjustment of the battery using the heating medium flowing therethrough; a second circuit that is configured to allow the heating medium to flow therethrough and causes the heating medium flowing therethrough and the oil flowing through the oil cooler to exchange heat to perform temperature adjustment of the oil; a third circuit that is configured to allow the heating medium to flow therethrough and includes a radiator that causes the heating medium flowing therethrough to exchange heat with outside air; a fourth circuit that is configured to allow the heating medium to flow therethrough and connected to the chiller; and a control unit that connects the first circuit and the fourth circuit to form a first heating medium circuit and disconnects the second circuit from the first heating medium circuit when an oil temperature in the oil cooler is lower than a first temperature, and connects the first circuit, the second circuit, the third circuit, and the fourth circuit to form a second heating medium circuit when the oil temperature in the oil cooler is equal to or higher than the first temperature.

According to this configuration, when the temperature of the drive device is low such as when being left in cold condition for a long period of time, the control unit connects the first circuit and the fourth circuit to form the first heating medium circuit. Since this first heating medium circuit is disconnected from the second circuit that performs temperature adjustment of the oil in the oil cooler of the drive device, the heat of the heating medium flowing through the first heating medium circuit is not absorbed by the oil in a low-temperature state. Accordingly, during heating, waste heat of the battery is absorbed by the refrigerant in the refrigerant circuit through the chiller and effectively used as a heat source for heating.

On the other hand, when the temperature of the drive device is high, the heating medium can be cooled by the radiator in the third circuit and by the chiller in the fourth circuit since the first circuit, the second circuit, the third circuit, and the fourth circuit are connected. This ensures a sufficient cooling capability for the drive device and the battery.

The drive device may include a driving motor, and an inverter that controls the driving motor. Oil of the driving motor may flow through the oil cooler, and the heating medium in the second circuit may cool the inverter. In this case, the control unit can form the first heating medium circuit when a temperature of the oil in the oil cooler is higher than a temperature of the heating medium in the second circuit, and form the second heating medium circuit when the temperature of the oil in the oil cooler is equal to or lower than the temperature of the heating medium in the second circuit.

The vehicle thermal management system may further include a battery temperature sensor that obtains a temperature of the battery. In this case, the control unit can determine whether the temperature of the battery obtained by the battery temperature sensor is equal to or higher than a second temperature, and form the first heating medium circuit when the temperature of the battery obtained by the battery temperature sensor is equal to or higher than the second temperature. That is, when the temperature of the battery is equal to or higher than the second temperature, it means waste heat of the battery can be obtained, and in this case, the waste heat of the battery can be effectively used for heating by forming the first heating medium circuit.

The control unit can also connect the second circuit, the third circuit, and the fourth circuit to form a third heating medium circuit and disconnect the first circuit from the third heating medium circuit when the temperature of the battery obtained by the battery temperature sensor is lower than the second temperature. Accordingly, when the temperature of the battery is low and waste heat of the battery is unlikely to be obtained, the first circuit can be kept disconnected. In this case, since waste heat of the drive device can be absorbed in the second circuit when the amount of heat generated by the drive device is large, the waste heat of the drive device is absorbed by the refrigerant in the refrigerant circuit through the chiller and can be effectively used as a heat source for heating.

The control unit can also form the third heating medium circuit when a temperature of the oil in the oil cooler is higher than a temperature of the heating medium in the second circuit, and connect the third circuit and the fourth circuit to form a fourth heating medium circuit and disconnect the first circuit and the second circuit from the fourth heating medium circuit when the temperature of the oil in the oil cooler is equal to or lower than the temperature of the heating medium in the second circuit. That is, when the temperature of the oil is relatively low, a further reduction in the temperature of the oil can be restrained by disconnecting the second circuit from the third circuit and the fourth circuit. Since this restrains a reduction in the viscosity of the oil, the flow resistance of the oil in the drive device is reduced, and power consumption can be reduced.

The vehicle thermal management system may further include a temperature sensor that obtains an outlet temperature of the heating medium in the chiller, and an outside air temperature sensor that obtains an outside air temperature. The control unit can actuate an electric fan that feeds outside air to the radiator when the outside air temperature obtained by the outside air temperature sensor is higher than the temperature of the heating medium obtained by the temperature sensor.

The control unit can determine whether a vehicle air conditioning device mounted on the vehicle is in a heating state, and form the first heating medium circuit or the second heating medium circuit when it is determined that the vehicle air conditioning device is in a heating state.

As described above, since it is possible to prevent the waste heat of the battery from being absorbed by the drive device when the temperature of the drive device is low, the waste heat of the battery can be effectively used for heating.

### Brief Description of Drawings

FIG. 1 is a functional block diagram of a vehicle thermal management system according to an embodiment of the present invention.
FIG. 2 is a diagram schematically showing an electric vehicle including the vehicle thermal management system.
FIG. 3 is a diagram showing the flow of a refrigerant and a coolant liquid in a first coolant liquid circuit.
FIG. 4 is a diagram showing the flow of the refrigerant and the coolant liquid in a second coolant liquid circuit.
FIG. 5 is a diagram showing the flow of the refrigerant and the coolant liquid in a third coolant liquid circuit.
FIG. 6 is a diagram showing the flow of the refrigerant and the coolant liquid in a fourth coolant liquid circuit.
FIG. 7 is a diagram showing the flow of the refrigerant and the coolant liquid in a fifth coolant liquid circuit.
FIG. 8 is a flowchart showing the flow of control by a control unit.

### [Mode for Carrying Out the Invention]

An embodiment of the present invention will be now described in detail on the basis of the drawings. Note that the following description of the preferred embodiment is merely illustrative in nature and is not intended to limit the present invention, its application, or its use. For example, the relative sizes and positional relationships of the members shown in the drawings are for the purpose of describing one embodiment and do not limit the present invention.

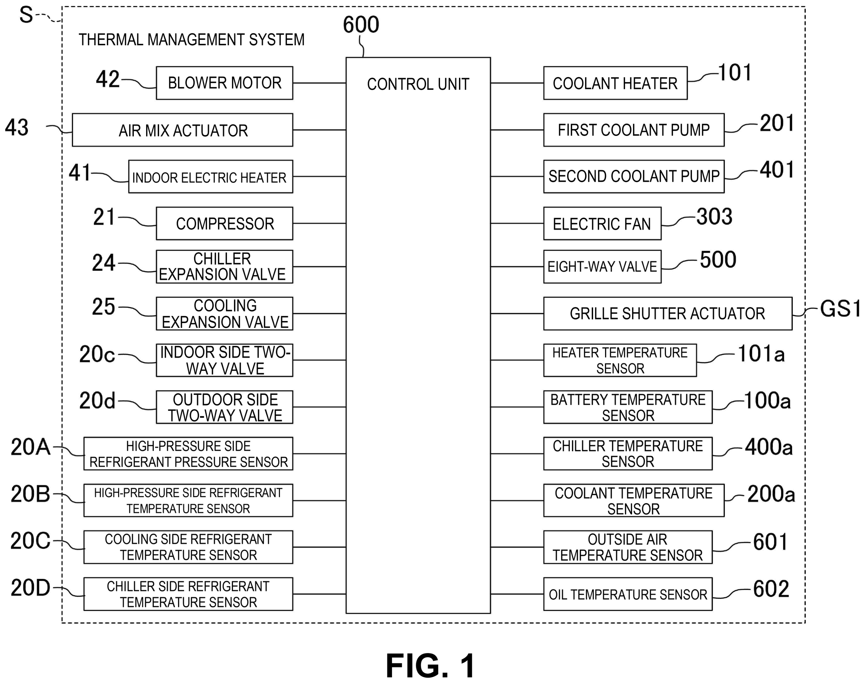

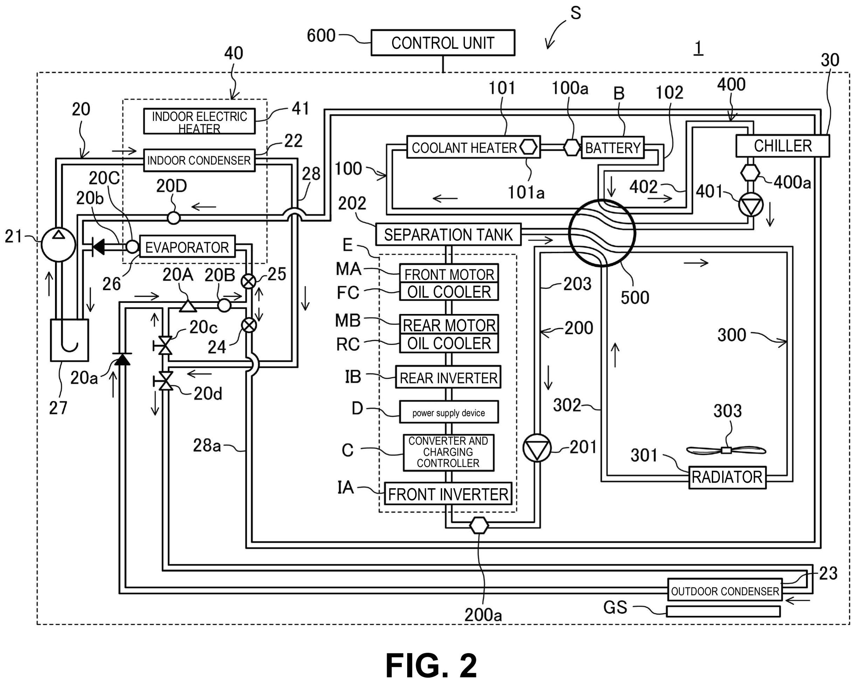

FIG. 1 is a functional block diagram of a vehicle thermal management system (hereinbelow, referred to as a "thermal management system") S according to the embodiment of the present invention. The thermal management system S is mounted on an electric vehicle 1 schematically shown in FIG. 2. That is, the electric vehicle 1 includes a front motor MA and a rear motor MB, and a battery B.

The front motor MA and the rear motor MB are driving motors, traveling motors that generate a driving force that is required to cause the electric vehicle 1 to travel. The front motor MA drives front wheels, and the rear motor MB drives rear wheels. Both the front motor MA and the rear motor MB may be mounted on the electric vehicle 1, or only one of them may be mounted on the electric vehicle 1.

The battery B is not a battery for an accessory but a high-capacity driving secondary battery that supplies electric power to the front motor MA and the rear motor MB. Although a typical example of the battery B is a lithium-ion battery, a rechargeable battery (e.g., a nickel-metal hydride battery) other than a lithium-ion battery can be applied to the present invention. In the case of a lithium-ion battery, its shape may be, for example, a pouch shape or a cylindrical shape. During braking of the electric vehicle 1, energy regenerated in the front motor MA and the rear motor MB is stored as electric power in the battery B.

The electric vehicle 1 includes a front inverter IA that controls the front motor MA, and a rear inverter IB that controls the rear motor MB. For example, the electric vehicle 1 may include a front e-axle (not shown) that includes the front motor MA, the front inverter IA, and a front transaxle (not shown). In addition, for example, the electric vehicle 1 may include a rear e-axle (not shown) that includes the rear motor MB, the rear inverter IB, and a rear transaxle (not shown).

The electric vehicle 1 includes a DC/DC converter and a charging controller (collectively designated by reference character C). The DC/DC converter and charging controller C is a device for passing, to the battery B, current supplied from an external charger (not shown) as a charging current of a magnitude appropriate for charging the battery B. That is, charging of the battery B is performed through the DC/DC converter and charging controller C. The charging of the battery B can be both normal charging that performs charging with an electric power of 11 kW at most and fast charging that performs charging with an electric power exceeding 11 kW. Hereinbelow, the "DC/DC converter and charging controller" will be simply referred to as the "charging controller". Alternating current during normal charging is input to the charging controller.

Although not an essential component, the electric vehicle 1 includes a power supply device D. The power supply device D is a device for supplying electric power of the battery B to the outside, and includes, for example, an inverter configured to output electric power of 100 V.

The front motor MA, the rear motor MB, the front inverter IA, the rear inverter IB, and the charging controller C are examples of elements that constitute a drive device E for causing the electric vehicle 1 to travel. The electric vehicle 1 travels by supplying electric power of the battery B to the drive device E. Although in the present embodiment the charging controller C is included as a part of the drive device E, the charging controller C does not have to be a component of drive device E. The power supply unit D may be or may not be included as a component of the drive device E. The drive device E may include a device related to travel of the electric vehicle 1 in addition to the devices described above. In addition, a device that does not require temperature adjustment may be excluded from the drive device E of the present invention.

Although the present embodiment describes a case in which the thermal management system S is mounted on the electric vehicle 1, this is not a limitation, and the thermal management system S can also be mounted on, for example, a plug-in hybrid vehicle. When the thermal management system S is mounted on a plug-in hybrid vehicle, similar effects can be also achieved.

The thermal management system S includes a refrigerant circuit 20 through which a refrigerant circulates, and a chiller 30 for using cold heat generated in the refrigerant circuit 20 for, for example, cooling the battery B. The thermal management system S includes, separately from the refrigerant circuit 20 through which the refrigerant circulates, for example, a first circuit 100, a second circuit 200, a third circuit 300, and a fourth circuit 400 as circuits configured to allow a heating medium to flow therethrough.

The first circuit 100 is a circuit for performing temperature adjustment of the battery B using the heating medium flowing therethrough. The second circuit 200 is a circuit for performing temperature adjustment of the drive device E using the heating medium flowing therethrough. The third circuit 300 is a circuit including a radiator 301 that causes the heating medium flowing therethrough to exchange heat with outside air to dissipate heat. The fourth circuit 400 is a circuit connected to the chiller 30. The heating medium flowing through the first circuit 100, the second circuit 200, the third circuit 300, and the fourth circuit 400 is, for example, a coolant liquid. In the following description, the heating medium is described as the coolant liquid.

The thermal management system S further includes an electric eight-way valve 500 for switching the connection state of the first circuit 100, the second circuit 200, the third circuit 300, and the fourth circuit 400, and a control unit 600 that controls each device included in the thermal management system S. The eight-way valve 500 may be included in the control unit 600. Although the specific configuration of each of the refrigerant circuit 20, the first circuit 100, the second circuit 200, the third circuit 300, and the fourth circuit 400 will be described first, the following description is an example, and other components that are not described may be included.

First, the refrigerant circuit 20 will be described. The refrigerant circuit 20 includes a compressor 21 that compresses the refrigerant, an indoor condenser 22, an outdoor condenser 23, a chiller expansion valve 24, a cooling expansion valve 25, a cooling evaporator 26, an accumulator 27, and a refrigerant pipe 28. The refrigerant pipe 28 is a member that connects the devices 21, 22, 23, 24, 25, 26, 27, and since the refrigerant pipe 28 is provided between the devices 21, 22, 23, 24, 25, 26, 27, the refrigerant circuit 20 includes a plurality of refrigerant pipes 28. In FIG. 2, to avoid complication of the drawing, not all the refrigerant pipes, but only one of them is designated by the reference numeral.

Although not shown, the compressor 21 is an electric compressor including an electric motor and a compression mechanism that is actuated by the electric motor. As shown in FIG. 1, the compressor 21 is connected to the control unit 600, and control unit 600 controls switching between ON and OFF and the rotational speed during ON. The compressor 21 operates with a combination of control according to a requirement on the air conditioning side and control according to a cooling requirement of the battery B and a cooling requirement of the drive device E.

The indoor condenser 22 is a heat exchanger that is connected to a refrigerant discharge port (not shown) of the compressor 21 through the refrigerant pipe 28 and into which the high-temperature and high-pressure refrigerant compressed by the compressor 21 flows. The indoor condenser 22 is disposed inside a vehicle cabin and is a device for heating the inside of the vehicle cabin. The vehicle cabin is a space in which an occupant stays.

The outdoor condenser 23 is a heat exchanger that is connected to a refrigerant outflow port (not shown) of the indoor condenser 22 through the refrigerant pipe 28 and into which the refrigerant that has flowed through the indoor condenser 22, that is, the refrigerant compressed by the compressor 21 flows. The outdoor condenser 23 is provided outside the vehicle cabin. The outside of the vehicle cabin is the outside of the space in which the occupant stays and is a space in which heat exchange with outside air can be performed. Examples of the outside of the vehicle cabin include a motor room (not shown) in which the front motor MA and the rear motor MB are housed, and a front portion of the vehicle (e.g., the inside of a front grille).

The electric vehicle 1 of the present embodiment includes a grille shutter GS. The grille shutter GS is a device for opening and closing an opening of the front grille (not shown), and includes a grille shutter actuator GS1 as shown in FIG. 1. The grille shutter actuator GS1 is connected to the control unit 600, is controlled by the control unit 600, and operates the grille shutter GS from an open state to a closed state and from a closed state to an open state. When the outdoor condenser 23 is provided inside the front grille, bringing the grille shutter GS into a closed state reduces an amount of outside air flowing into the outdoor condenser 23, and bringing the grille shutter GS into an open state increases the amount of outside air flowing into the outdoor condenser 23.

The cooling evaporator 26 is disposed inside the vehicle cabin and is a device for cooling the inside of the vehicle cabin or dehumidifying air supplied into the vehicle cabin. A refrigerant outflow port (not shown) of the outdoor condenser 23 and a refrigerant inflow port (not shown) of the cooling evaporator 26 are connected by the refrigerant pipe 28. Between the outdoor condenser 23 and the cooling evaporator 26 in the refrigerant pipe 28, a cooling expansion valve 25 that expands the refrigerant flowing out of the outdoor condenser 23 is provided. The refrigerant expanded by the cooling expansion valve 25 flows into the cooling evaporator 26. The cooling expansion valve 25 is connected to the control unit 600 and its degree of opening is changeable by the control unit 600.

The refrigerant pipe 28 includes a chiller pipe 28a that extends to the chiller 30. The chiller 30 is a heat exchanger that is connected between the chiller expansion valve 24 and the compressor 21 and configured to be capable of exchanging heat with the heating medium which will be described further below. The chiller 30 is disposed at a location away from the outdoor condenser 23 and the radiator 301.

The chiller pipe 28a branches off from a portion upstream of the cooling expansion valve 25 in the refrigerant pipe 28, and the refrigerant flowing out of the outdoor condenser 23 flows into the chiller pipe 28a. The chiller pipe 28a is provided with a chiller expansion valve 24 that expands the refrigerant flowing out of the outdoor condenser 23. A refrigerant inflow port (not shown) of the chiller 30 is connected to a portion downstream of the chiller expansion valve 24 in the chiller pipe 28a. Thus, the refrigerant expanded by the chiller expansion valve 24 flows into the chiller 30.

The downstream side of the chiller pipe 28a is connected to a refrigerant inflow port (not shown) of the accumulator 27. A refrigerant outflow port of the cooling evaporator 26 is also connected to the refrigerant inflow port of the accumulator 27. The accumulator 27 performs gas-liquid separation of the refrigerant flowing in through the chiller 30 and/or the cooling evaporator 26. A liquid refrigerant outflow port (not shown) of the accumulator 27 is connected to a refrigerant suction port (not shown) of the compressor 21.

The refrigerant circuit 20 is provided with a check valve 20a between the outdoor condenser 23, and the chiller expansion valve 24 and the cooling expansion valve 25. This check valve 20a prevents backflow of the refrigerant from the chiller expansion valve 24 and cooling expansion valve 25 side to the outdoor condenser 23 side.

The refrigerant circuit 20 is provided with a check valve 20b between the cooling evaporator 26, and the chiller 30 and the accumulator 27. This check valve 20b prevents backflow of the refrigerant from the chiller 30 and accumulator 27 side to the cooling evaporator 26 side.

The refrigerant circuit 20 includes an indoor side two-way valve 20c and an outdoor side two-way valve 20d. The indoor side two-way valve 20c and the outdoor side two-way valve 20d are composed of, for example, solenoid valves and connected to the control unit 600, and the opening and closing operations are controlled by the control unit 600. The indoor side two-way valve 20c is provided between the indoor condenser 22 and the cooling evaporator 26, and when the indoor side two-way valve 20c is brought into an open state by the control unit 600, the refrigerant flowing out of the indoor condenser 22 flows into the chiller expansion valve 24 and the cooling expansion valve 25, whereas when the indoor side two-way valve 20c is brought into a closed state by the control unit 600, the refrigerant flowing out of the indoor condenser 22 dose not flow into the chiller expansion valve 24 and the cooling expansion valve 25. That is, the indoor side two-way valve 20c controls the flow of the refrigerant to the cooling evaporator 26 and the chiller 30.

The outdoor side two-way valve 20d is provided between the indoor condenser 22 and the outdoor condenser 23. When the outdoor side two-way valve 20d is brought into an open state by the control unit 600, the refrigerant flowing out of the indoor condenser 22 flows into the outdoor condenser 23, whereas when the outdoor side two-way valve 20d is brought into a closed state by the control unit 600, the refrigerant flowing out of the indoor condenser 22 dose not flow into the outdoor condenser 23. That is, the outdoor side two-way valve 20d controls the flow of the refrigerant to the outdoor condenser 23.

The refrigerant circuit 20 includes a high-pressure side refrigerant pressure sensor 20A, a high-pressure side refrigerant temperature sensor 20B, a cooling side refrigerant temperature sensor 20C, and a chiller side refrigerant temperature sensor 20D. The high-pressure side refrigerant pressure sensor 20A is provided on the downstream side of the indoor condenser 22 and the outdoor condenser 23 and on the upstream side of the chiller expansion valve 24 and the cooling expansion valve 25, and obtains the pressure of the refrigerant flowing through this point. The refrigerant pressure obtained by the high-pressure side refrigerant pressure sensor 20A is output to the control unit 600.

The high-pressure side refrigerant temperature sensor 20B is provided on the downstream side of the indoor condenser 22 and the outdoor condenser 23 and on the upstream side of the chiller expansion valve 24 and the cooling expansion valve 25, and obtains the temperature of the refrigerant flowing through this point. The refrigerant temperature obtained by the high-pressure side refrigerant temperature sensor 20B is output to the control unit 600.

The cooling side refrigerant temperature sensor 20C is provided between the cooling evaporator 26 and the check valve 20b, and obtains the temperature of the refrigerant flowing through this point. That is, the cooling side refrigerant temperature sensor 20C obtains the temperature of the refrigerant that has flowed out of the cooling evaporator 26. The refrigerant temperature obtained by the cooling side refrigerant temperature sensor 20C is output to the control unit 600.

The chiller side refrigerant temperature sensor 20D is provided between the chiller 30 and the accumulator 27, and obtains the temperature of the refrigerant flowing through this point. That is, the chiller side refrigerant temperature sensor 20D obtains the temperature of the refrigerant that has flowed out of the chiller 30. The refrigerant temperature obtained by the chiller side refrigerant temperature sensor 20D is output to the control unit 600.

The indoor condenser 22 and the cooling evaporator 26 constitute a part of a vehicle air conditioning device 40. The vehicle air conditioning device 40 further includes an indoor electric heater 41 and a blower motor 42 (shown in FIG. 1). The blower motor 42 is a device for blowing outside air and/or indoor air to the indoor condenser 22, the cooling evaporator 26, and the indoor electric heater 41. The indoor electric heater 41 and the blower motor 42 are connected to the control unit 600 and controlled by the control unit 600.

The vehicle air conditioning device 40 is provided with an air mix actuator 43 (shown in FIG. 1) that operates an air mix damper (not shown). The air mix actuator 43 is connected to the control unit 600 and controlled by the control unit 600. By the air mix actuator 43 operating the air mix damper, temperature adjustment of air-conditioning air supplied into the vehicle cabin is enabled.

That is, in the vehicle air conditioning device 40, the whole of the air blown by the blower motor 42 is supplied to the cooling evaporator 26. Basically, during cooling operation, the air mix actuator 43 operates the air mixer damper such that the whole of the air passing through the cooling evaporator 26 is supplied into the vehicle cabin without passing through the indoor condenser 22 and the indoor electric heater 41.

On the other hand, during heating operation, the air mix actuator 43 operates the air mix damper such that part or the whole of the air passing through the cooling evaporator 26 is supplied to the indoor condenser 22 and the indoor electric heater 41 and heated, and then supplied into the vehicle cabin.

The control unit 600 determines how much amount of the air that has passed through the cooling evaporator 26 should be supplied to the indoor condenser 22 and the indoor electric heater 41 in accordance with a target temperature inside the vehicle cabin, and controls the air mix actuator 43 such that the determined amount of air is supplied to the indoor condenser 22 and the indoor electric heater 41. The indoor electric heater 41 includes a heating element that generates heat by the supply of electric power, such as a PTC element. The indoor electric heater 41 may be provided as needed.

The first circuit 100 is a circuit for performing temperature adjustment of the battery B and may also be referred to as a temperature adjustment circuit for the battery B. The first circuit 100 includes a coolant heater 101, and a first coolant pipe 102.

The coolant heater 101 is an electric heater that includes a heating element that generates heat by the supply of electric power, such as a PTC element, and is controlled by the control unit 600. When the temperature of the battery B is low to the extent of not being appropriate for charging and discharging, the control unit 600 actuates the coolant heater 101, thereby heating the coolant liquid. When the temperature of the battery B is within a temperature range appropriate for charging and discharging, or when the temperature of the battery B exceeds the temperature range appropriate for charging and discharging, the control unit 600 stops the coolant heater 101.

The first coolant pipe 102 is a pipe for circulating the coolant liquid in the first circuit 100 through the eight-way valve 500. An upstream end and a downstream end of the first coolant pipe 102 are connected to connection ports of the eight-way valve 500. The coolant heater 101 is provided on the upstream side of the first coolant pipe 102. The battery B is provided downstream of the coolant heater 101 in the first coolant pipe 102.

A heat exchanger (not shown) is provided in a portion of the first coolant pipe 102, and this heat exchanger is disposed in contact with an outer face of battery B. Heat exchange is performed between the coolant liquid flowing through the inside of the heat exchanger and the battery B, where when the temperature of the battery B is higher than the temperature of the coolant liquid, the battery B is cooled, and conversely, when the temperature of the battery B is lower than the temperature of the coolant liquid, the battery B is heated.

The first circuit 100 is provided with a heater temperature sensor 101a, and a battery temperature sensor 100a. The heater temperature sensor 101a is a sensor for obtaining the temperature of the coolant heater 101. The heater temperature obtained by the heater temperature sensor 101a is output to the control unit 600.

The battery temperature sensor 100a is a sensor for obtaining the temperature of the battery B. The battery temperature sensor 100a may obtain the temperature of the battery B, for example, by obtaining the temperature of a cell surface or the vicinity of a cell of the battery B or by obtaining the temperature of the coolant liquid in the vicinity of the battery B, and there is no particular limitation on the position or location where the battery temperature sensor 100a is provided. Information about the temperature of the battery B obtained by the battery temperature sensor 100a is output to the control unit 600.

The second circuit 200 is a circuit for performing temperature adjustment of the drive device E and may also be referred to as a temperature adjustment circuit for the drive device E. The second circuit 200 includes a first coolant pump 201, a separation tank 202, and a second coolant pipe 203.

The second coolant pipe 203 is a pipe for circulating the coolant liquid in the second circuit 200 through the eight-way valve 500. An upstream end and a downstream end of the second coolant pipe 203 are connected to connection ports of the eight-way valve 500. The first coolant pump 201 is provided on the upstream side of the second coolant pipe 203 and forms a flow that feeds the coolant liquid in the second coolant pipe 203 to the downstream side and circulates the coolant liquid. The drive device E is provided downstream of the first coolant pump 201 in the second coolant pipe 203. The drive device E is a cooling target device cooled by the coolant liquid flowing through the second circuit 200.

Although there is no particular limitation on the supply order of the coolant liquid to the front motor MA, the rear motor MB, the front inverter IA, the rear inverter IB, the charging controller C, and the power supply device D that are included in the drive device E, the second coolant pipe 203 is configured such that the coolant liquid is supplied in the following order in the present embodiment. That is, from the upstream side to the downstream side in the flow direction of the coolant liquid, the front inverter IA, the charging controller C, the power supply device D, the rear inverter IB, the rear motor MB, and the front motor MA are connected in series in this order through the second coolant pipe 203.

The front motor MA and the rear motor MB are of oil-cooled type that circulates oil for cooling. That is, the thermal management system S includes a front oil cooler FC through which oil of the front motor MA flows to cool the oil, and a rear oil cooler RC through which oil of the rear motor MB circulates to cool the oil. When only the front motor MA is provided, the rear oil cooler RC is omitted, and when only the rear motor MB is provided, the front oil cooler FC is omitted. Only one common oil cooler may be provided for the front motor MA and the rear motor MB. In the following description, a case in which the front oil cooler FC and the rear oil cooler RC are provided will be described.

In the second circuit 200, the coolant liquid flowing through the second circuit 200 is caused to exchange heat with the oil in the front oil cooler FC and the rear oil cooler RC to perform temperature adjustment of the oil. In the present embodiment, since the rear oil cooler RC is disposed on the upstream side of the front oil cooler FC, the coolant liquid that has exchanged heat with the oil in the rear oil cooler RC exchanges heat with the oil in the front oil cooler FC.

As shown in FIG. 1, the thermal management system S includes an oil temperature sensor 602. Although only one oil temperature sensor 602 is shown in FIG. 1, the oil temperature sensor 602 obtains the temperature of the oil in the front motor MA and the temperature of the oil in the rear motor MB. The oil temperature sensor 602 is connected to the control unit 600 and outputs information about the obtained oil temperature to the control unit 600.

The front inverter IA, the charging controller C, the power supply device D, the rear inverter IB, and the like may also be an oil-cooled type or a water-cooled type. In the case of the water-cooled type, the front inverter IA, the charging controller C, the power supply device D, the rear inverter IB, and the like can be cooled using a heat exchange structure (not shown) provided in a portion of the second coolant pipe 203. That is, although there is no particular limitation on the structure, the front inverter IA, the charging controller C, the power supply device D, and the rear inverter IB can be cooled by heat exchange performed between the coolant liquid flowing through the heat exchange structure of the second coolant pipe 203, and the front inverter IA, the charging controller C, the power supply device D and the rear inverter IB.

In the present embodiment, since the front inverter IA, the charging controller C, the power supply device D, and the rear inverter IB are disposed on the upstream side of the front oil cooler FC and the rear oil cooler RC, it is possible to preferentially supply the coolant liquid having a relatively low temperature to the front inverter IA, the charging controller C, the power supply device D, and the rear inverter IB.

The separation tank 202 is provided downstream of the drive device E in the second coolant pipe 203. The coolant liquid that has passed through the drive device E flows into the separation tank 202 and then flows to the eight-way valve 500. Although not shown, the separation tank 202 is connected to a reserve tank in which the coolant liquid is stored.

The second circuit 200 is provided with a coolant temperature sensor 200a. The coolant temperature sensor 200a is a sensor for obtaining the temperature of the coolant liquid in the second coolant pipe 203. The coolant temperature sensor 200a is disposed between the first coolant pump 201 and the drive device E.

The coolant temperature sensor 200a may constitute a drive device temperature sensor that obtains the temperature of the drive device E. For example, by the coolant temperature sensor 200a obtaining the temperature of the coolant flowing through the second circuit 200, it is possible to obtain an inlet temperature of the drive device E, that is, the temperature of the drive device E. In addition, the thermal management system S may include a drive device temperature sensor that obtains the temperature of the drive device E separately from the coolant temperature sensor 200a. For example, a temperature sensor that obtains the temperature of a relatively heat-sensitive device such as the front inverter IA or the rear inverter IB may be provided, and this temperature sensor may be used as the drive device temperature sensor. In this manner, there is no particular limitation on the position or location where the drive device temperature sensor is provided. Hereinbelow, a case in which the coolant temperature sensor 200a is used as the drive device temperature sensor will be described. Information about the temperature of the drive device E obtained by the coolant temperature sensor 200a is output to the control unit 600.

The third circuit 300 includes a third coolant pipe 302, and an electric fan 303, in addition to the radiator 301 for dissipating heat of the coolant liquid to outside air. The radiator 301 is provided outside the vehicle cabin, as with the outdoor condenser 23. In the present embodiment, the outdoor condenser 23 is provided inside the front grille in view of ensuring a sufficient ventilation amount, and the radiator 301 is disposed on the rear side (the downstream side in the outside air flow direction) of the outdoor condenser 23 that is provided inside the front grille. The outdoor condenser 23 and the radiator 301 may be modularized being stacked in the outside air flow direction, or the outdoor condenser 23 and the radiator 301 may be separately mounted on a vehicle body. In any case, the positional relationship between the outdoor condenser 23 and the radiator 301 is set such that outside air passing through the outdoor condenser 23 is introduced into the radiator 301.

The third coolant pipe 302 is a pipe for circulating the coolant liquid in the third circuit 300 through the eight-way valve 500. An upstream end and a downstream end of the third coolant pipe 302 are connected to connection ports of the eight-way valve 500.

The electric fan 303 is a device for feeding outside air to the radiator 301 and is provided, for example, inside the front grille. When the electric fan 303 is actuated, the control unit 600 controls the grille shutter actuator GS1 to open the grille shutter GS.

The flow direction of outside air formed by the electric fan 303 is the direction from the front side to the rear side of the vehicle. This flow direction of outside air is the same as the flow direction of outside air during travel of the electric vehicle 1. Since the outdoor condenser 23 is disposed on the front side of the radiator 301, the flow formed by the electric fan 303 causes outside air to pass through the outdoor condenser 23 and then flow into the radiator 301. The same flow of outside air also occurs during travel of the electric vehicle 1. The electric fan 303 is connected to the control unit 600, and the control unit 600 controls switching between ON and OFF and the rotational speed during ON in accordance with the degree of requirement of heat dissipation. The electric fan 303 operates not only for feeding outside air to the radiator 301 but also when the refrigerant circuit 20 is operating, thereby supplying outside air also to the outdoor condenser 23. Thus, it can be said that the electric fan 303 also constitutes a part of the refrigerant circuit 20.

The fourth circuit 400 is a circuit for cooling the coolant liquid using the chiller 30 and may also be referred to as a coolant liquid cooling circuit. The fourth circuit 400 includes a second coolant pump 401, and a fourth coolant pipe 402. The fourth coolant pipe 402 is a pipe for circulating the coolant liquid in the fourth circuit 400 through the eight-way valve 500. An upstream end and a downstream end of the fourth coolant pipe 402 are connected to connection ports of the eight-way valve 500.

The second coolant pump 401 is provided in the fourth coolant pipe 402 and forms a flow that feeds the coolant liquid in the fourth coolant pipe 402 to the downstream side and circulates the coolant liquid. The chiller 30 is provided upstream of the second coolant pump 401 in the fourth coolant pipe 402.

The chiller 30 is provided with a refrigerant channel through which the refrigerant supplied by the chiller pipe 28a of the refrigerant circuit 20 flows, and a coolant liquid channel through which the coolant liquid supplied by the fourth coolant pipe 402 flows. The refrigerant flowing through the refrigerant channel and the coolant liquid flowing through the coolant liquid channel can exchange heat. When the temperature of the coolant liquid is higher than the temperature of the refrigerant, it is possible to cool the coolant liquid.

The fourth circuit 400 is provided with a chiller temperature sensor 400a. The chiller temperature sensor 400a is a sensor for obtaining the temperature of the coolant liquid that has been cooled by the chiller 30. The temperature of the coolant liquid obtained by the chiller temperature sensor 400a is output to the control unit 600. The fourth coolant pipe 402 of the fourth circuit 400 is connected to a reserve tank (not shown).

The control unit 600 includes a microcomputer including, for example, a central processing unit, a read only memory (ROM), a random access memory (RAM), and the like, various signal processing devices, an input/output interface, and the like. A program is stored in a storage unit (not shown) included in the control unit 600, and the central processing unit executes various processes and control as described below in accordance with the program.

The control unit 600 includes a part for controlling the vehicle air conditioning device 40, a part for controlling the first circuit 100, the second circuit 200, the third circuit 300, and the fourth circuit 400, and a part for controlling the eight-way valve 500, and these may be composed of a combination of hardware and software, or may be composed of hardware alone.

The part for controlling the vehicle air conditioning device 40, the part for controlling the first circuit 100, the second circuit 200, the third circuit 300, and the fourth circuit 400, and the part for controlling the eight-way valve 500 may be physically separated. In addition, the part for controlling the vehicle air conditioning device 40, the part for controlling the first circuit 100, the second circuit 200, the third circuit 300, and the fourth circuit 400, and the part for controlling the eight-way valve 500 may be integrated. In addition, the control unit 600 may include a part that controls the drive device E of the vehicle. In this manner, there is no particular limitation on the configuration of the control unit 600, and the control unit 600 may be configured to be capable of integrally controlling in-vehicle equipment and devices. For example, the control unit 600 may be configured to be capable of obtaining vehicle speed information, thereby enabling the control unit 600 to also perform control based on the vehicle speed.

An outside air temperature sensor 601 that obtains the outside air temperature is connected to the control unit 600, and the outside air temperature obtained by the outside air temperature sensor 601 (obtained outside air temperature) is input to the control unit 600. The outside air temperature sensor 601 is a component of the thermal management system S. Although there is no particular limitation on the position of the outside air temperature sensor 601, the position can be, for example, the upstream side in the outside air flow direction in the front grille. In addition, although not shown, an indoor air temperature sensor that obtains the temperature inside the vehicle cabin, an operation panel that adjusts the set temperature of air conditioning, and the like are also connected to the control unit 600.

In addition, the eight-way valve 500 is a device for connecting and disconnecting two or more of the first circuit 100, the second circuit 200, the third circuit 300, and the fourth circuit 400, and is controlled by the control unit 600 as described below. Note that the connections and disconnections of the first circuit 100, the second circuit 200, the third circuit 300, and the fourth circuit 400 shown below are examples, and other connections and disconnections can also be performed.

### (Specific Control by Control Unit)

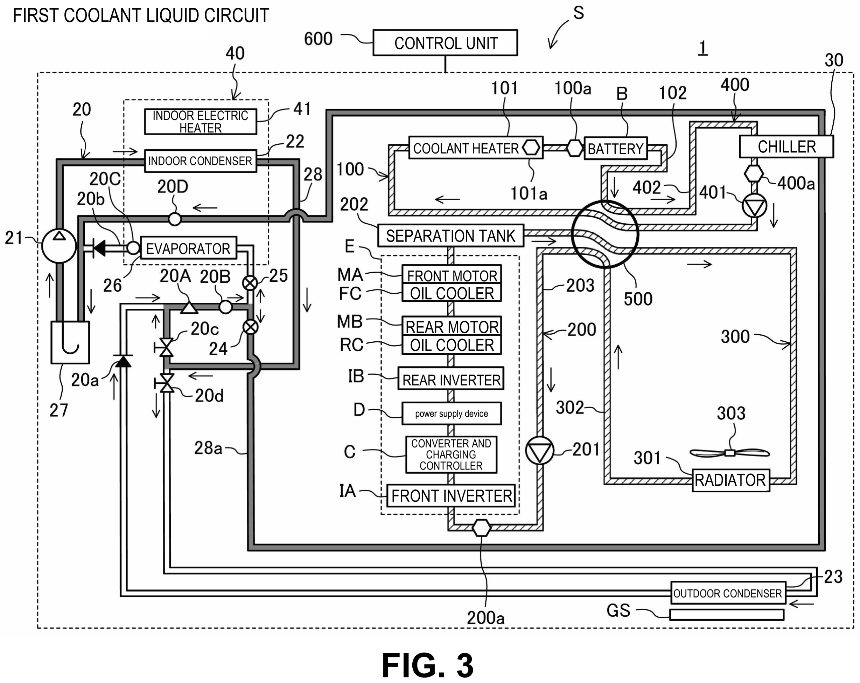

The control unit 600 controls the refrigerant circuit 20 and the vehicle air conditioning device 40 during air conditioning inside the vehicle cabin. As shown in FIG. 3, in heating operation that heats the inside of the vehicle cabin, the control unit 600 actuates the compressor 21 of the refrigerant circuit 20 to supply the high-temperature and high-pressure refrigerant to the indoor condenser 22 to condense the refrigerant, thereby causing the indoor condenser 22 to serve as an air heater. The control unit 600 actuates the indoor electric heater 41 as needed, actuates the blower motor 42 of the vehicle air conditioning device 40, and further controls the air mix actuator 43 to operate the air mix damper such that air-conditioning air having a target temperature can be obtained. The obtained air-conditioning air is supplied to each part of the vehicle cabin.

Although not shown, in cooling operation that cools the inside of the vehicle cabin, the control unit 600 actuates the compressor 21 of the refrigerant circuit 20 to supply the high-temperature and high-pressure refrigerant to the indoor condenser 22 and the outdoor condenser 23 to condense the refrigerant, and then supplies the gas-liquid two-phase refrigerant expanded by the cooling expansion valve 25 to the cooling evaporator 26 to evaporate the refrigerant, thereby causing the cooling evaporator 26 to serve as an air cooler. The control unit 600 actuates the blower motor 42 of the vehicle air conditioning device 40 and further controls the air mix actuator 43 to operate the air mix damper such that air-conditioning air having a target temperature can be obtained. Note that when cooling of the inside of the vehicle cabin is not required, the blower motor 42 may be kept stopped. Accordingly, heat absorption by the cooling evaporator 26 is hardly performed.

In FIG. 3, a part where the refrigerant flows is shown in black, and a part where the coolant liquid flows is shown with cross hatching. Operation in the first coolant liquid circuit shown in FIG. 3 is referred to as the first heating operation. In the first heating operation, the control unit 600 controls the eight-way valve 500 to connect the first coolant pipe 102 of the first circuit 100 and the fourth coolant pipe 402 of the fourth circuit 400 to form a first coolant liquid circuit and connect the second coolant pipe 203 of the second circuit 200 and the third coolant pipe 302 of the third circuit 300, and further disconnect the first circuit 100 and the fourth circuit 400 from the second circuit 200 and the third circuit 300. The circuit formed by the first circuit 100 and the fourth circuit 400 is referred to as the first coolant liquid circuit (first heating medium circuit).

Then, the control unit 600 actuates the second coolant pump 401. When the second coolant pump 401 is actuated, since the first coolant pipe 102 of the first circuit 100 and the fourth coolant pipe 402 of the fourth circuit 400 are connected, the coolant liquid flows from the second coolant pump 401 through the eight-way valve 500, the first coolant pipe 102, the coolant heater 101, the battery B, the eight-way valve 500, the fourth coolant pipe 402, and the chiller 30 in this order, and is suctioned into the second coolant pump 401. In this manner, the coolant liquid is circulated through the first circuit 100 and the fourth circuit 400.

Since the first coolant liquid circuit formed by the first circuit 100 and the fourth circuit 400 is disconnected from the second circuit 200 that performs temperature adjustment of the oil in the oil coolers FC, RC, the heat of the coolant liquid flowing through the first coolant liquid circuit is not absorbed by the oil in a low-temperature state. Accordingly, during heating, waste heat of the battery B is absorbed by the refrigerant in the refrigerant circuit 20 through the chiller 30 and can be effectively used as a heat source for heating.

In addition, the control unit 600 actuates the first coolant pump 201. When the first coolant pump 201 is actuated, since the second coolant pipe 203 of the second circuit 200 and the third coolant pipe 302 of the third circuit 300 are connected, the coolant liquid flows from the first coolant pump 201 through the drive device E, the separation tank 202, the eight-way valve 500, the third coolant pipe 302, the radiator 301, the eight-way valve 500, and the second coolant pipe 203 in this order, and is suctioned into the first coolant pump 201.

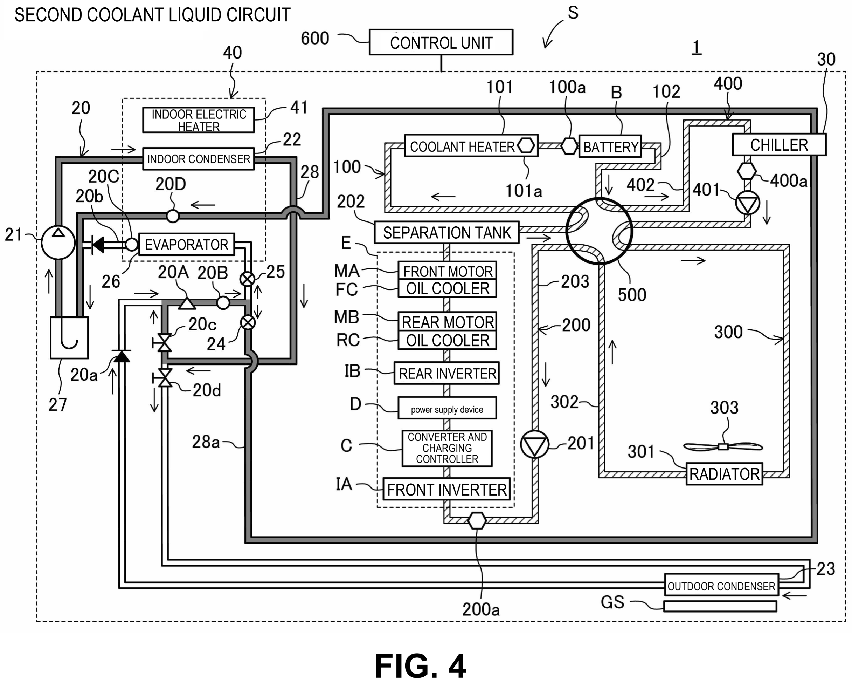

When the temperatures of the front motor MA and the rear motor MB rise, the control unit 600 forms a second coolant liquid circuit (second heating medium circuit) as shown in FIG. 4. When the second coolant liquid circuit is formed, the control unit 600 controls the eight-way valve 500 to connect the first coolant pipe 102 of the first circuit 100, the second coolant pipe 203 of the second circuit 200, the third coolant pipe 302 of the third circuit 300, and the fourth coolant pipe 402 of the fourth circuit 400. The circuit formed by the first circuit 100, the second circuit 200, the third circuit 300, and the fourth circuit 400 is referred to as the second coolant liquid circuit.

Then, the control unit 600 actuates the first coolant pump 201 and/or the second coolant pump 401. When the first coolant pump 201 and/or the second coolant pump 401 is actuated, the coolant liquid flows from the radiator 301 through the eight-way valve 500, the first coolant pump 201, the drive device E, the separation tank 202, the eight-way valve 500, the coolant heater 101, the battery B, the eight-way valve 500, the chiller 30, the second coolant pump 401, the eight-way valve 500, and the radiator 301 in this order. In the second coolant liquid circuit, waste heat of the drive device E and waste heat of the battery B are absorbed by the refrigerant in the refrigerant circuit 20 through chiller 30 and can be effectively used as a heat source for heating. In the second coolant liquid circuit, although only one of the first coolant pump 201 and the second coolant pump 401 may be actuated, it may be preferable to actuate both the first coolant pump 201 and the second coolant pump 401 in view of increasing the heat exchange amount in each part.

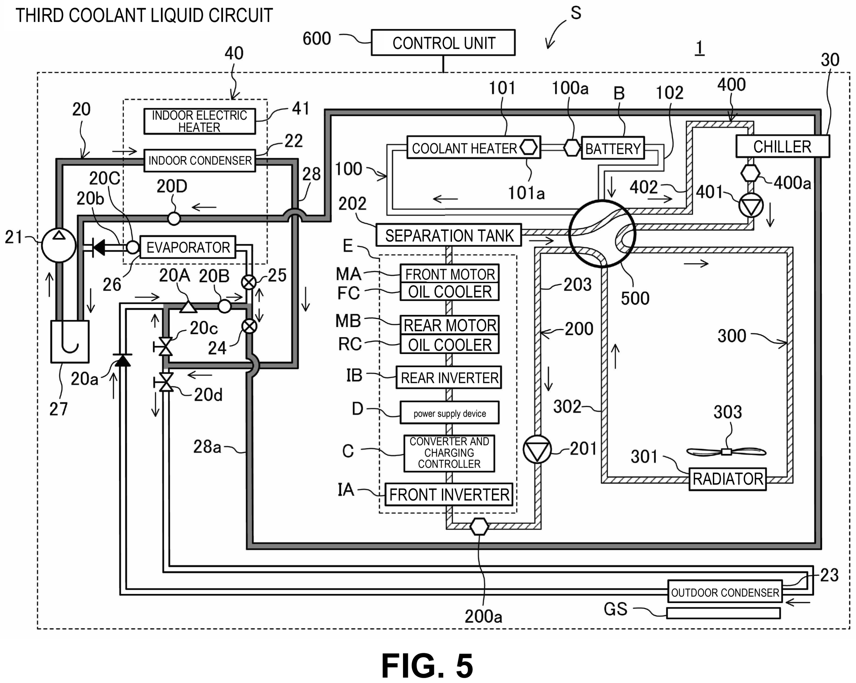

In addition, when it is desired to maintain the temperature of the battery B and heat dissipation from the drive device E is required, the control unit 600 forms a third coolant liquid circuit (third heating medium circuit) as shown in FIG. 5. When the third coolant liquid circuit is formed, the control unit 600 controls the eight-way valve 500 to connect the second coolant pipe 203 of the second circuit 200, the third coolant pipe 302 of the third circuit 300, and the fourth coolant pipe 402 of the fourth circuit 400. The circuit formed by the second circuit 200, the third circuit 300, and the fourth circuit 400 is referred to as the third coolant liquid circuit. The first circuit 100 is kept disconnected from the second circuit 200, the third circuit 300, and the fourth circuit 400.

Then, the control unit 600 actuates the first coolant pump 201 and/or the second coolant pump 401. When the first coolant pump 201 and/or the second coolant pump 401 is actuated, the coolant liquid flows from the radiator 301 through the eight-way valve 500, the first coolant pump 201, the drive device E, the separation tank 202, the eight-way valve 500, the chiller 30, the second coolant pump 401, the eight-way valve 500, and the radiator 301 in this order. In the third coolant liquid circuit, since the first circuit 100 that performs temperature adjustment of the battery B is disconnected from the second circuit 200, the third circuit 300, and the fourth circuit 400, the temperature of the battery B can be maintained. In addition, since the second circuit 200, the third circuit 300, and the fourth circuit 400 are connected, waste heat of the drive device E is absorbed by the refrigerant in the refrigerant circuit 20 through the chiller 30 and can be effectively used as a heat source for heating.

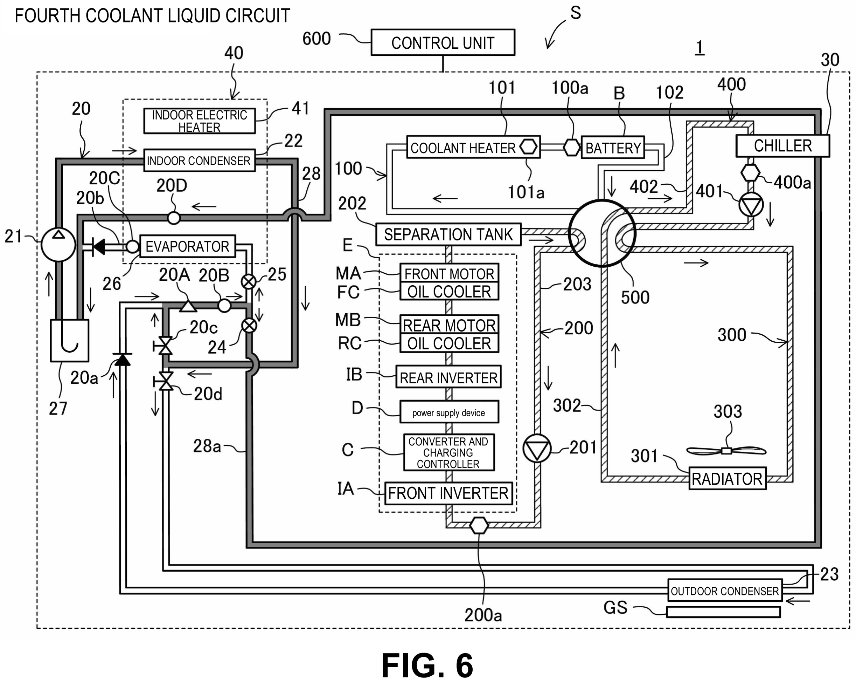

In addition, when it is desired to maintain the temperature of the battery B and heat dissipation from the drive device E is not required, the control unit 600 forms a fourth coolant liquid circuit (fourth heating medium circuit) as shown in FIG. 6. When the fourth coolant liquid circuit is formed, the control unit 600 controls the eight-way valve 500 to connect the third coolant pipe 302 of the third circuit 300 and the fourth coolant pipe 402 of the fourth circuit 400. The circuit formed by the third circuit 300 and the fourth circuit 400 is referred to as the fourth coolant liquid circuit. The first circuit 100 and the second circuit 200 are kept disconnected from the third circuit 300 and the fourth circuit 400. In addition, the first circuit 100 and the second circuit 200 are kept disconnected from each other.

Then, the control unit 600 actuates the first coolant pump 201 and the second coolant pump 401. When the first coolant pump 201 is actuated, the coolant liquid flows through the drive device E, the separation tank 202, the eight-way valve 500, and the first coolant pump 201. In addition, when the second coolant pump 401 is actuated, the coolant liquid flows from the radiator 301 through the eight-way valve 500, the chiller 30, the second coolant pump 401, the eight-way valve 500, and the radiator 301 in this order. In the fourth coolant liquid circuit, since the first circuit 100 that performs temperature adjustment of the battery B is disconnected from the second circuit 200, the third circuit 300, and the fourth circuit 400, the temperature of the battery B can be maintained. In addition, since the second circuit 200 and the third circuit 300 are disconnected from each other, the coolant liquid in the second circuit 200 does not flow through the radiator 301 of the third circuit 300 and heat is thus not dissipated to outside air, and the temperature of the oil in the front motor MA and the rear motor MB is not unnecessarily reduced.

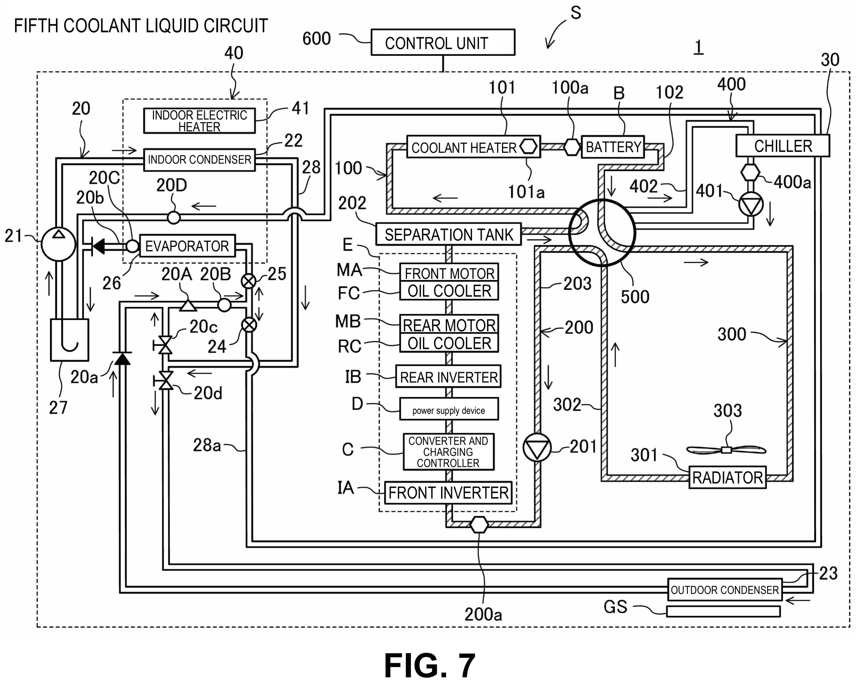

In addition, when the thermal management system S is in operation, defrosting of the radiator 301 may be required. When defrosting of the radiator 301 is performed, the control unit 600 forms a fifth coolant liquid circuit (fifth heating medium circuit) as shown in FIG. 7. When the fifth coolant liquid circuit is formed, the control unit 600 controls the eight-way valve 500 to connect the first coolant pipe 102 of the first circuit 100, the second coolant pipe 203 of the second circuit 200, and the third coolant pipe 302 of the third circuit 300. The circuit formed by the first circuit 100, the second circuit 200, and the third circuit 300 is referred to as the fifth coolant liquid circuit. The fourth circuit 400 is kept disconnected from the first circuit 100, the second circuit 200, and the third circuit 300.

Then, when heat is absorbed from outside air in the radiator 301 during operation of the thermal management system S, the control unit 600 performs a determination of the necessity or unnecessity of defrosting operation. As the determination of the necessity or unnecessity of defrosting operation, the control unit 600 determines whether the temperature of the coolant liquid at a coolant liquid outlet of the radiator 301 is lower by a predetermined temperature than the outside air temperature and this low-temperature state has continued for a predetermined time. When the temperature of the coolant liquid at the coolant liquid outlet of the radiator 301 is lower by the predetermined temperature than the outside air temperature obtained by the outside air temperature sensor 601 and this low-temperature state has continued for the predetermined time, it can be estimated that defrosting operation is required after an activation switch of the electric vehicle 1 is turned OFF. On the other hand, when one of the temperature condition and the time condition is not satisfied, the control unit 600 determines that defrosting operation is not required after the activation switch of the electric vehicle 1 is turned OFF.

When the control unit 600 determines that defrosting operation is required in the above-mentioned determination of the necessity or unnecessity of defrosting operation, the control unit 600 forms the fifth coolant liquid circuit and actuates the first coolant pump 201. When the first coolant pump 201 is actuated, the coolant liquid flows through the drive device E, the separation tank 202, the eight-way valve 500, the coolant heater 101, the battery B, the eight-way valve 500, the radiator 301, the eight-way valve 500, and the first coolant pump 201. In the fifth coolant liquid circuit, the coolant liquid absorbs heat in the drive device E and/or the battery B and then flows into the radiator 301 of the third circuit 300. Accordingly, the surface temperature of the radiator 301 rises, and frost on the surface of the radiator 301 melts. The defrosting operation may be performed, for example, for several tens of seconds to several minutes, or may be stopped on the basis of the temperature of the coolant liquid at the coolant liquid outlet of the radiator 301 when this temperature becomes equal to or higher than a certain temperature.

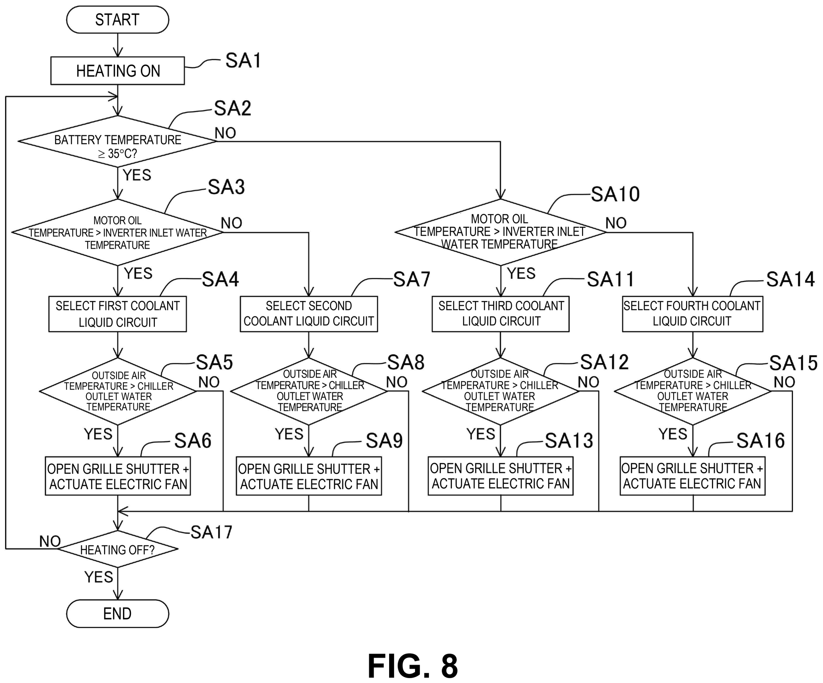

A specific example of the control by the control unit 600 will be described on the basis of a flowchart shown in FIG. 8. The flowchart shown in FIG. 8 starts, for example, at the timing when the power of the electric vehicle 1 is turned ON. In step SA1 after the start, the control unit 600 determines whether heating in the vehicle cabin is ON. For example, the control unit 600 acquires the operating state of the vehicle air conditioning device 40, and when the vehicle air conditioning device 40 is performing heating operation, the flow advances from step SA1 to step SA2 is made. When the vehicle air conditioning device 40 is not performing heating operation, that is, when air conditioning is OFF or in the case of cooling operation, the flow does not advance to subsequent steps.

In step SA2, it is determined whether the temperature of the battery B obtained by battery temperature sensor 100a (hereinbelow, simply referred to as the temperature of the battery B) is equal to or higher than a target temperature. Although in the present embodiment the target temperature of the battery B is 35°C, this is not a limitation. The target temperature of the battery B can be determined on the basis of a target state of function (SOF) of the battery B. For example, a map of a required output that is determined from the traveling condition or the like of the electric vehicle 1 and the SOF is acquired in advance. A required output is obtained from the current traveling condition or the like of the electric vehicle 1, and the target temperature of the battery B that can achieve the obtained required output is acquired from the above map. The target temperature of the battery B acquired in this manner can be used as a determination threshold in step SA2. That is, in step SA2, the target temperature of the battery B that can achieve the SOF target and the current temperature of the battery B are compared with each other, and the flow advances to step SA3 when the current temperature of the battery B is equal to or higher than the target temperature and advances to step SA10 when the current temperature of the battery B is lower than the target temperature.

In step SA3, the control unit 600 determines whether the temperature obtained by the oil temperature sensor 602 (hereinbelow, referred to as the motor oil temperature) is higher than an inverter inlet water temperature. The temperature obtained by the oil temperature sensor 602 is the oil temperature in the oil coolers FC, RC. The inverter inlet water temperature can be, for example, the temperature obtained by the coolant temperature sensor 200a. The inverter inlet water temperature may be an inlet water temperature of the front inverter IA or an inlet water temperature of the rear inverter IB.

When YES is determined in step SA3 and the motor oil temperature is higher than the inverter inlet water temperature, the flow advances to step SA4, and the control unit 600 switches the circuit of the thermal management system S to the first coolant liquid circuit. When the switching to the first coolant liquid circuit is made, the control unit 600 also determines whether the motor oil temperature is lower than a first temperature, and when the motor oil temperature is lower than the first temperature and the heat of the battery B in the first circuit 100 is absorbed by the oil coolers FC, RC in the second circuit 200, the switching to the first coolant liquid circuit is made. In this manner, since the control unit 600 forms the first coolant liquid circuit when the temperature of the oil in the oil coolers FC, RC is higher than the temperature of the coolant liquid in the second circuit 200, the heat of the coolant liquid in the first circuit 100 is not absorbed by the oil in a low-temperature state, and thus, during heating, waste heat of the battery B is absorbed by the refrigerant in the refrigerant circuit 20 through the chiller 30 and can be effectively used as a heat source for heating. In addition, in step SA2, the control unit 600 determines whether the temperature of the battery B obtained by the battery temperature sensor 100a is equal to or higher than the target temperature (second temperature), and when the temperature of the battery B obtained by the battery temperature sensor 100a is equal to or higher than the target temperature, the control unit 600 forms the first coolant liquid circuit.

In step SA5, the control unit 600 determines whether the outside air temperature obtained by the outside air temperature sensor 601 is higher than an outlet water temperature (outlet temperature) of the chiller 30. The outlet water temperature of the chiller 30 is the temperature of the coolant liquid obtained by the chiller temperature sensor 400a. When the outside air temperature is higher than the outlet water temperature of the chiller 30, it is possible to absorb heat from outside air, and in this case, the flow advances to step SA6, and the control unit 600 controls the grille shutter actuator GS1 to bring the grille shutter GS into an open state and actuates the electric fan 303. Accordingly, since heat can be absorbed from outside air, the heating efficiency is improved. When the outside air temperature is equal to or lower than the outlet water temperature of the chiller 30, the flow advances to step SA17, and the control unit 600 determines whether heating is OFF on the basis of the operating state of the vehicle air conditioning device 40. When the heating is OFF, the control is finished, whereas when the heating is continuing, the flow returns to step SA2.

When NO is determined in step SA3 and the motor oil temperature is equal to or lower than the inverter inlet water temperature, the flow advances to step SA7, and the control unit 600 switches the circuit of the thermal management system S to the second coolant liquid circuit. When the switching to the second coolant liquid circuit is made, the control unit 600 also determines whether the motor oil temperature is lower than the first temperature, and when the motor oil temperature is equal to or higher than the first temperature and there is no possibility that the heat of the battery B in the first circuit 100 is absorbed by the oil coolers FC, RC in the second circuit 200, the switching to the second coolant liquid circuit is made. In this manner, the control unit 600 forms the second coolant liquid circuit when the temperature of the oil in the oil coolers FC, RC is equal to or lower than the temperature of the coolant liquid in the second circuit 200.

In step SA8, as with step SA5, the control unit 600 determines whether the outside air temperature obtained by the outside air temperature sensor 601 is higher than the outlet water temperature of the chiller 30. When the outside air temperature is higher than the outlet water temperature of the chiller 30, it is possible to absorb heat from outside air. In this case, the flow advances to step SA9, and the control unit 600 controls the grille shutter actuator GS1 to bring the grille shutter GS into an open state and actuates the electric fan 303. Accordingly, since heat can be absorbed from outside air, the heating efficiency is improved. When the outside air temperature is equal to or lower than the outlet water temperature of the chiller 30, the flow advances to step SA17, and the control unit 600 determines whether heating is OFF on the basis of the operating state of the vehicle air conditioning device 40. When the heating is OFF, the control is finished, whereas when the heating is continuing, the flow returns to step SA2.

In the second coolant liquid circuit, waste heat of the drive device E and waste heat of the battery B are absorbed by the refrigerant in the refrigerant circuit 20 through the chiller 30 and can be effectively used as a heat source for heating. For example, when the amount of heat absorption in the chiller 30 is less than the amount of waste heat, and the outlet water temperature of the chiller 30 is, for example, equal to or higher than 25°C, temperature adjustment can be performed by dissipating heat in the radiator 301 to inhibit the high pressure of the refrigerant on the refrigerant circuit 20 side. This control can also be executed by the control unit 600.

When NO is determined in step SA2 and the current temperature of the battery B is lower than the target temperature, the flow advances to step SA10. In step SA10, as with step SA3, the control unit 600 determines whether the motor oil temperature is higher than the inverter inlet water temperature. When YES is determined in step SA10 and the motor oil temperature is higher than the inverter inlet water temperature, the flow advances to step SA11, and the control unit 600 switches the circuit of the thermal management system S to the third coolant liquid circuit. In this manner, when the temperature of the battery B obtained by the battery temperature sensor 100a is lower than the target temperature, the control unit 600 connects the second circuit 200, the third circuit 300, and the fourth circuit 400 to form the third coolant liquid circuit, and disconnects the first circuit 100 from the third coolant liquid circuit. In addition, when the temperature of the oil in the oil coolers FC, RC is higher than the temperature of the coolant liquid in the second circuit 200, the control unit 600 forms the third coolant liquid circuit.

In step SA12, as with step SA5, the control unit 600 determines whether the outside air temperature obtained by the outside air temperature sensor 601 is higher than the outlet water temperature of the chiller 30. When the outside air temperature is higher than the outlet water temperature of the chiller 30, it is possible to absorb heat from outside air, and in this case, the flow advances to step SA13, and the control unit 600 controls the grille shutter actuator GS1 to bring the grille shutter GS into an open state and actuates the electric fan 303. Accordingly, since heat can be absorbed from outside air, the heating efficiency is improved. When the outside air temperature is equal to or lower than the outlet water temperature of the chiller 30, the flow advances to step SA17, and the control unit 600 determines whether heating is OFF on the basis of the operating state of the vehicle air conditioning device 40. When the heating is OFF, the control is finished, whereas when the heating is continuing, the flow returns to step SA2.

When the third coolant liquid circuit is formed, the temperature of the battery B is insufficient relative to the target temperature as NO was determined in step SA2. In such a case, by forming the third coolant liquid circuit and disconnecting the first circuit 100 from the second circuit 200, the third circuit 300, and the fourth circuit 400, the temperature of the battery B can be maintained. In addition, in the third coolant liquid circuit, since the second circuit 200, the third circuit 300, and the fourth circuit 400 are connected, the heat of the drive device E can be effectively used as heat for heating.

When No is determined in step SA10 and the motor oil temperature is equal to or lower than the inverter inlet water temperature, the flow advances to step SA14, and the control unit 600 switches the circuit of the thermal management system S to the fourth coolant liquid circuit. In this manner, when the temperature of the oil in the oil coolers FC, RC is equal to or lower than the temperature of the coolant liquid in the second circuit 200, the control unit 600 connects the third circuit 300 and the fourth circuit 400 to form the fourth coolant liquid circuit, and disconnects the first circuit 100 and the second circuit 200 from the fourth coolant liquid circuit.

In step SA15, as with step SA5, the control unit 600 determines whether the outside air temperature obtained by the outside air temperature sensor 601 is higher than the outlet water temperature of the chiller 30. When the outside air temperature is higher than the outlet water temperature of the chiller 30, it is possible to absorb heat from outside air, and in this case, the flow advances to step SA16, and the control unit 600 controls the grille shutter actuator GS1 to bring the grille shutter GS into an open state and actuates the electric fan 303. Accordingly, since heat can be absorbed from outside air, the heating efficiency is improved. When the outside air temperature is equal to or lower than the outlet water temperature of the chiller 30, the flow advances to step SA17, and the control unit 600 determines whether heating is OFF on the basis of the operating state of the vehicle air conditioning device 40. When the heating is OFF, the control is finished, whereas when the heating is continuing, the flow returns to step SA2.

The embodiment described above is merely illustrative in all respects and should not be interpreted in a limited manner. Furthermore, any modifications and changes falling within the equivalent scope of the claims are all within the scope of the present invention.

In the embodiment described above, when the control unit 600 controls the grille shutter actuator GS1 to bring the grille shutter GS into an open state, the electric fan 303 is also actuated. However, heat absorption from outside air may be performed without actuating the electric fan 303. Accordingly, when the amount of heat obtained by heat absorption from outside air is smaller than the electric power that actuates the electric fan 303, it is possible to improve the heating efficiency.

As described above, the vehicle thermal management system according to the present disclosure can be used in, for example, an electric vehicle.
- 1: electric vehicle
- 20: refrigerant circuit
- 21: compressor
- 22: indoor condenser
- 23: outdoor condenser
- 24: chiller expansion valve
- 25: cooling expansion valve
- 26: cooling evaporator
- 30: chiller
- 100: first circuit
- 100a: battery temperature sensor
- 200: second circuit
- 300: third circuit
- 301: radiator
- 400: fourth circuit
- 600: control unit
- 601: outside air temperature sensor
- 602: oil temperature sensor
- B: battery
- E: drive device
- S: thermal management system
- FC, RC: oil cooler
- IA: front inverter

## Claims

1. A vehicle thermal management system (S) mounted on a vehicle (1) that travels by supplying electric power of a battery (B) to a drive device (E), the vehicle thermal management system (S) comprising:
- an oil cooler (FC, RC) through which oil of the drive device (E) flows;
- a refrigerant circuit (20) including a compressor (21) that compresses a refrigerant, an outdoor condenser (23) into which the refrigerant compressed by the compressor (21) flows, and a chiller expansion valve (24) that expands the refrigerant flowing out of the outdoor condenser (23);
- a chiller (30) connected between the chiller expansion valve (24) and the compressor (21) in the refrigerant circuit (20);
- a first circuit (100) that is configured to allow a heating medium to flow therethrough and performs temperature adjustment of the battery (B) using the heating medium flowing therethrough;
- a second circuit (200) that is configured to allow the heating medium to flow therethrough and causes the heating medium flowing therethrough and the oil flowing through the oil cooler (FC, RC) to exchange heat to perform temperature adjustment of the oil;
- a third circuit (300) that is configured to allow the heating medium to flow therethrough and includes a radiator (301) that causes the heating medium flowing therethrough to exchange heat with outside air;
- a fourth circuit (400) that is configured to allow the heating medium to flow therethrough and connected to the chiller (30); and
- a control unit (600) that connects the first circuit (100) and the fourth circuit (400) to form a first heating medium circuit and disconnects the second circuit (200) from the first heating medium circuit when an oil temperature in the oil cooler (FC, RC) is lower than a first temperature, and connects the first circuit (100), the second circuit (200), the third circuit (300), and the fourth circuit (400) to form a second heating medium circuit when the oil temperature in the oil cooler (FC, RC) is equal to or higher than the first temperature.

2. The vehicle thermal management system (S) according to claim 1, wherein
- the drive device (E) includes a driving motor (MA, MB) and an inverter IB) that controls the driving motor (MA, MB),
- oil of the driving motor (MA, MB) flows through the oil cooler (FC, RC),
- the heating medium in the second circuit (200) cools the inverter (IA, IB), and
- the control unit (600) forms the first heating medium circuit when a temperature of the oil in the oil cooler (FC, RC) is higher than a temperature of the heating medium in the second circuit (200), and forms the second heating medium circuit when the temperature of the oil in the oil cooler (FC, RC) is equal to or lower than the temperature of the heating medium in the second circuit (200).

3. The vehicle thermal management system (S) according to claim 1 or 2, further comprising a battery temperature sensor (100a) that obtains a temperature of the battery (B), wherein
- the control unit (600) determines whether the temperature of the battery (B) obtained by the battery temperature sensor (100a) is equal to or higher than a second temperature, and forms the first heating medium circuit when the temperature of the battery (B) is equal to or higher than the second temperature.

4. The vehicle thermal management system (S) according to claim 3, wherein
- the control unit (600) connects the second circuit (200), the third circuit (300), and the fourth circuit (400) to form a third heating medium circuit and disconnects the first circuit (100) from the third heating medium circuit when the temperature of the battery (B) obtained by the battery temperature sensor (100a) is lower than the second temperature.

5. The vehicle thermal management system (S) according to claim 3 or 4, wherein
- the drive device (E) includes a driving motor (MA, MB) and an inverter (IA, IB) that controls the driving motor (MA, MB),
- oil of the driving motor (MA, MB) flows through the oil cooler (FC, RC),
- the heating medium in the second circuit (200) cools the inverter (IA, IB), and
- the control unit (600) forms the third heating medium circuit when a temperature of the oil in the oil cooler (FC, RC) is higher than a temperature of the heating medium in the second circuit (200), and connects the third circuit (300) and the fourth circuit (400) to form a fourth heating medium circuit and disconnects the first circuit (100) and the second circuit (200) from the fourth heating medium circuit when the temperature of the oil in the oil cooler (FC, RC) is equal to or lower than the temperature of the heating medium in the second circuit (200).

6. The vehicle thermal management system (S) according to any one of claims 1 to 5, further comprising:
- a temperature sensor (400a) that obtains an outlet temperature of the heating medium in the chiller (30); and
- an outside air temperature sensor (601) that obtains an outside air temperature,
wherein
- the control unit (600) actuates an electric fan (303) that feeds outside air to the radiator (301) when the outside air temperature obtained by the outside air temperature sensor (601) is higher than the temperature of the heating medium obtained by the temperature sensor (400a).

7. The vehicle thermal management system (S) according to any one of claims 1 to 6, wherein
- the control unit (600) determines whether a vehicle air conditioning device (40) mounted on the vehicle (1) is in a heating state, and forms the first heating medium circuit or the second heating medium circuit when it is determined that the vehicle air conditioning device (40) is in a heating state.

8. A method of operating a thermal management system (S) of a vehicle (1) according to claim 1, the method comprising the steps of:
a) detecting an oil temperature of oil in the oil cooler (FC, RC);
b) when the detected oil temperature is lower than a first temperature,
- connecting the first heating-medium circuit (100), which is configured to adjust a temperature of the battery (B), and the fourth heating-medium circuit (400), which is connected to the chiller (30), to form a first heating-medium circuit, and
- disconnecting the second heating-medium circuit (200), which is configured to adjust a temperature of the oil, from the first heating-medium circuit; and
c) when the detected oil temperature is equal to or higher than the first temperature,
- connecting the first, second, third and fourth heating-medium circuits (100, 200, 300, 400) to form a second heating-medium circuit, wherein the third heating-medium circuit (300) comprises a radiator (301) configured to exchange heat with outside air.

9. The method according to claim 8,
wherein the drive device (E) comprises at least one electric motor (MA, MB) and an inverter (IA, IB) controlling the electric motor (MA, MB),
wherein oil of the electric motor (MA, MB) flows through the oil cooler (FC, RC), and wherein the second heating-medium circuit (200) is configured to cool the inverter (IA, IB), the method further comprising:
- forming the first heating-medium circuit when a temperature of the oil in the oil cooler (FC, RC) is higher than a temperature of a heating medium in the second heating-medium circuit (200); and
- forming the second heating-medium circuit when the temperature of the oil in the oil cooler (FC, RC) is equal to or lower than the temperature of the heating medium in the second heating-medium circuit (200).

10. The method according to claim 8 or 9, wherein a battery temperature is detected by a battery temperature sensor (100a), the method further comprising:
- comparing the detected battery temperature with a second temperature; and
- forming the first heating-medium circuit when the detected battery temperature is equal to or higher than the second temperature.

11. The method according to claim 10, the method further comprising:
- connecting the second, third and fourth heating-medium circuits (200, 300, 400) to form a third heating-medium circuit; and
- disconnecting the first heating-medium circuit (100) from the third heating-medium circuit, when the detected battery temperature is lower than the second temperature.

12. The method according to claim 10 or 11, wherein the drive device (E) comprises at least one electric motor (MA, MB) and an inverter (IA, IB) controlling the electric motor (MA, MB), wherein oil of the electric motor (MA, MB) flows through the oil cooler (FC, RC), and wherein the second heating-medium circuit (200) is configured to cool the inverter (IA, IB), the method further comprising:
- forming the third heating-medium circuit when a temperature of the oil in the oil cooler (FC, RC) is higher than a temperature of a heating medium in the second heating-medium circuit (200); and
- connecting the third and fourth heating-medium circuits (300, 400) to form a fourth heating-medium circuit and disconnecting the first and second heating-medium circuits (100, 200) from the fourth heating-medium circuit, when the temperature of the oil in the oil cooler (FC, RC) is equal to or lower than the temperature of the heating medium in the second heating-medium circuit (200).

13. The method according to any one of claims 8 to 12, wherein a temperature of the heating medium at an outlet of the chiller (30) is detected by a temperature sensor (400a) and an outside air temperature is detected by an outside air temperature sensor (601), the method further comprising:
- driving an electric fan (303) configured to supply outside air to the radiator (301) when the detected outside air temperature is higher than the detected temperature of the heating medium at the outlet of the chiller (30).

14. The method according to any one of claims 8 to 13, wherein an operating state of a vehicle air-conditioning system (40) is detected, the method further comprising:
- forming the first heating-medium circuit or the second heating-medium circuit when it is determined that the vehicle air-conditioning system (40) is in a heating mode.
